# FASCICULE DE BREVET EUROPEEN

(11) **EP 0 520 894 B1**
(45) Date de publication et mention de la délivrance du brevet: **28.08.1996**
(21) Numéro de dépôt: 92401795.7
(22) Date de dépôt: 25.06.1992
(51) Int. Cl.: B23K 9/127

(54) **Tête de soudage pour mesure de paramètres de soudage et son application au soudage automatique**
Schweisskopf zum Messen von mehreren Schweissparametern und Verfahren zu dessen Verwendung
Welding head for measuring welding parameters and method of use

(30) Priorité: 28.06.1991 FR 9108110
(43) Date de publication de la demande: 30.12.1992
(73) Titulaire: COMMISSARIAT A L'ENERGIE ATOMIQUE, 75015 Paris (FR)
(72) Inventeur: Dillet, Alain, F-92800 Puteaux (FR); De Prunele, Diane, F-75016 Paris (FR)
(74) Mandataire: Dubois-Chabert, Guy

(56) Documents cités:
- EP-A- 0 214 120
- WO-A-86/04845
- PATENT ABSTRACTS OF JAPAN vol. 11, no. 301 (M-628)30 Septembre 1987 & JP-A-62 093 093 (MITSUBISHI ELECTRIC CORP.)28 Avril 1987

## Description

La présente invention concerne une tête de soudage permettant la mesure de paramètres de soudage grâce à des moyens de vision de la scène de soudage.

L'invention trouve de nombreuses applications dans la plupart des domaines industriels de haute-technologie tels que le spatial, l'agro-alimentaire, l'aéronautique et le nucléaire. De façon plus particulière, elle peut être mise en application au sein d'un système de soudage automatique.

Les systèmes classiques de soudage automatique reproduisent systématiquement des séquences prédéfinies. En effet, les paramètres de soudage liés, notamment, à la trajectoire suivie par la tête de soudage, sont préalablement mis au point pour des conditions de soudage nominales ; ils sont ensuite enregistrés et utilisés pour toutes les soudures, quelles que soient les conditions dans lesquelles se déroule la scène de soudage. Néanmoins, ces conditions de soudage ne sont que très rarement constantes, et les perturbations aléatoires qu'elles présentent ne sont généralement pas maîtrisées. Ces perturbations telles que, par exemple, les écarts de positionnement, les écarts d'accostage et les déformations, peuvent être la cause de défauts ayant de fâcheuses conséquences (rebuts, par exemple).

Il est connu, pour corriger en partie certains de ces défauts, d'utiliser des capteurs installés sur des systèmes de soudage préexistants. De tels dispositifs sont décrits dans le livre "Robots de soudage, capteurs et adaptativité de trajectoire", dans la série "Traité de soudage automatique" publié par les éditions Hermès, sous la plume de J.M. Detriche en 1988.

La présente invention a pour objet une tête de soudage permettant une mesure des paramètres essentiels à un soudage de qualité. Ces mesures de paramètres de soudage se font par analyse d'images prises de la scène de soudage par une caméra de prise de vues.

Intégrés à un système de soudage automatique, les paramètres ainsi mesurés peuvent être corrigés quasi-instantanément, évitant ainsi des écarts de trajectoire, des écarts de pénétration et autres écarts, supérieurs à leurs écarts tolérés respectifs.

De façon plus précise, l'invention a pour objet une tête de soudage comportant :
- une torche de soudage apte à former un cordon de soudage situé dans un plan de soudage ;
- des moyens d'éclairage d'une zone de soudage comprenant un bain de soudage ainsi que le cordon de soudage ;
- des moyens aptes à effectuer des prises de vues de la zone de soudage ; la tête de soudage étant caractérisée en ce qu'elle comporte de plus :
- une électrode de soudage sur la torche de soudage ;
- des moyens aptes à former des spots lumineux ponctuels et élémentaires sur la zone de soudage ; et
- des moyens aptes à déterminer la position des spots par triangulation et permettant ainsi de mesurer la hauteur de la tête de soudage au-dessus de leurs points d'impact.

Un autre dispositif de soudage automatique est décrit dans la demande de brevet JP-A-62-93 093. Ce dispositif met en oeuvre un procédé de binarisation d'une image de la pièce à souder et, notamment, de la ligne de soudage. Cette image est divisée en plusieurs parties sur chacune desquelles la position de la ligne de soudage est mesurée. Lorsque l'une des mesures diffère de façon trop importante des autres mesures, on effectue un moyennage des différentes mesures. Ce dispositif ne permet donc qu'un suivi du joint.

Avantageusement, les moyens de prise de vues sont orientables, par rapport à une normale à un plan de soudage contenant la zone de soudage, selon au moins un angle ajustable de prise de vues, chacun de ces angles permettant la détermination de au moins un paramètre de soudage.

Ces angles de prise de vues sont respectivement d'environ 15 et 45°.

De plus, la torche de soudage est inclinée par rapport à la normale au plan de soudage, l'angle de cette inclinaison étant négatif pour rapport aux angles de prise de vues.

Selon une caractéristique de l'invention, la tête de soudage comprend en outre une buse de soudage apte à permettre la formation des spots lumineux et la prise de vues de la scène de soudage.

La buse comprend elle-même un large corps entourant une partie inférieure de la torche de soudage, et un fourreau entourant une partie supérieure de l'électrode, l'extrémité inférieure de ladite électrode étant extérieure à la buse.

Selon un mode de réalisation de l'invention, les moyens de formation des spots lumineux sur la scène de soudage sont aptes à former deux spots disposés de part et d'autre, et en avant, de l'électrode de soudage.

Selon un autre mode de réalisation, les moyens de formation des spots lumineux sur la scène de soudage sont aptes à former trois spots disposés l'un à l'arrière de l'électrode par rapport à la direction de soudage et les deux autres de part et d'autre, et en avant, de l'électrode.

De plus, les moyens pour former les spots lumineux comprennent au moins une source de lumière monochromatique optiquement couplée, à autant de fibres optiques que de spots, chacune de ces fibres étant reliée à une optique de projection.

De façon avantageuse, les moyens pour observer la zone comportent une caméra de prise de vues équipée d'un filtre spectral escamotable, centré sur la lumière monochromatique des moyens de formation des spots.

Selon un mode de réalisation, les seconds moyens pour effectuer les prises de vues sont en même temps les premiers moyens aptes à déterminer la position des spots. Selon un autre mode de réalisation, les premiers moyens aptes à déterminer la position des spots sont des capteurs de position indépendants.

Cette tête de soudage met en oeuvre un procédé consistant en une prise de vue d'une scène de soudage en cours durant laquelle est réalisé le bain de soudage et est formé le cordon de soudage.

Cette tête de soudage peut être intégrée dans un système de soudage automatique caractérisé en ce qu'il comprend en outre des moyens de traitement reliés aux moyens pour observer la zone de soudage et aptes à corriger, en temps réel, le déplacement relatif entre la torche et la zone de soudage et les paramètres de soudage.

D'autres caractéristiques et avantages ressortiront mieux de la description qui va suivre, donnée en référence aux dessins dans lesquels :
- la figure 1 représente schématiquement la tête de soudage selon l'invention ;
- la figure 2 représente schématiquement, et selon une coupe longitudinale, la buse de vision utilisée dans l'invention ;
- les figures 3A et 3B représentent les orientations angulaires de différents composants de la tête de soudage de l'invention, pour le mode de réalisation préféré, en coupe suivant un plan parallèle à la direction de soudage d'une part, et suivant un plan perpendiculaire à ladite direction de soudage d'autre part.

La présente invention permet de mesurer des paramètres essentiels pour obtenir une bonne qualité de soudage. Les paramètres principaux à évaluer sont la position du joint, la largeur (ou diamètre) du bain de fusion et la hauteur de la tête de soudage au-dessus des points d'impacts des spots. D'autres paramètres sont également évaluables à partir de la présente invention.

Dans le présent texte, on emploiera le terme "hauteur de tête" en référence à un soudage en position à plat ; dans le cas d'un soudage dans une autre position (par exemple verticale montante), il est clair qu'il s'agira de la distance entre la tête et le plan tangent à la surface de soudage.

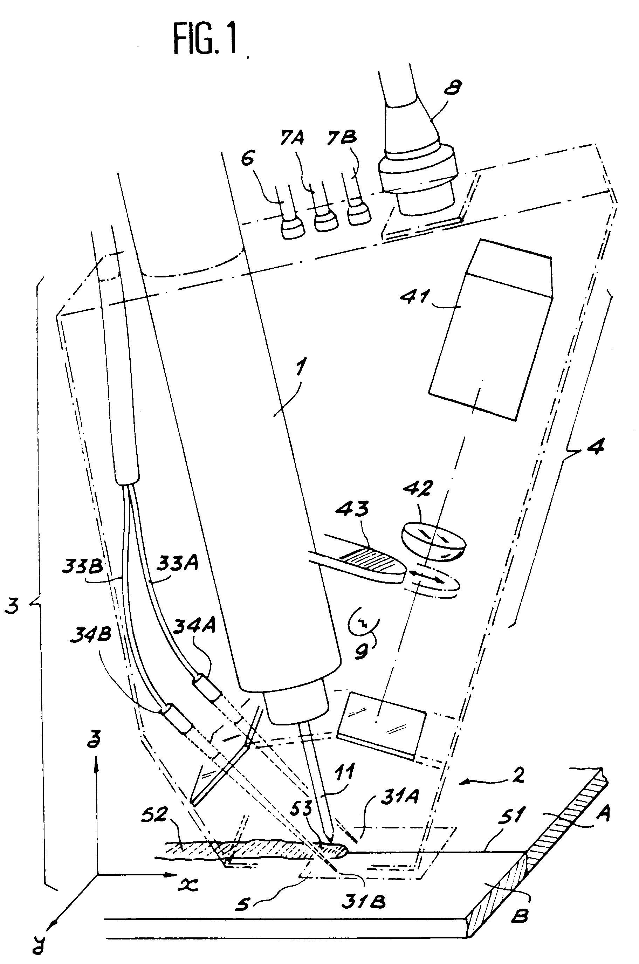

La figure 1 montre une représentation schématique de la tête de soudage avec ses principaux éléments qui sont la torche de soudage 1 sur laquelle est adaptée une buse spéciale-vision 2, des moyens 3 de formation de spots lumineux et des moyens 4 de prise de vues.

L'ensemble de ces éléments de la tête de soudage permet de visualiser, sur des images prises de façon continue par les moyens de prise de vues, la scène de soudage. En effet, cette scène de soudage se situe dans le champ visuel 5 desdits moyens de prise de vues, ce champ correspondant à une portion du plan de soudage (x, y) dans lequel se situent les deux pièces A et B à souder.

Dans ce champ 5, on voit le joint 51 c'est-à-dire la jointure entre les deux pièces A et B que l'on cherche à souder, le cordon 52 c'est-à-dire le résultat du bain de fusion 53 qui assure le soudage entre lesdites pièces A et B, et la pointe 12 d'une électrode de soudage.

De façon typique, ce champ 5 est de dimension 30 x 15 millimètres (30 mm suivant l'axe de soudage), pour un soudage à l'arc.

La torche de soudage 1, adaptée au soudage sous gaz inerte avec une électrode de Tungstène (TIG), comprend, en son extrémité proche du plan de soudage (x, y), une électrode 11 de soudage. Cette électrode 11 se termine par une pointe 12 permettant de créer l'arc électrique qui est à l'origine du bain de fusion 53 s'établissant entre les pièces A et B.

La torche de soudage 1 est légèrement inclinée par rapport à la normale au plan de soudage (x, y) pour ne pas obstruer la scène de soudage aux moyens 4 de prise de vues.

Ces moyens 4 de prise de vues sont solidaires de la torche 1, permettant ainsi d'obtenir une image stable. Ainsi, bien que la torche 1 et les pièces à souder soient en mouvement relatif, la scène de soudage reste fixe par rapport à la torche 1 de soudage. De plus, lesdits moyens de prise de vues sont inclinés vers l'avant de la scène de soudage par rapport à la normale au plan de soudage (x, y) et ils comprennent essentiellement une caméra 41 de prise de vues.

Selon le mode de réalisation décrit de l'invention, la caméra 41 est du type à transfert de charges (CCD) à temps d'exposition variable électroniquement par pas. La dynamique possible varie de 1/50ème à 1/1000ème de seconde. On a ainsi l'équivalent d'une commande de diaphragme télécommandable, programmable et répétitive sans introduction d'aucun organe mécanique.

Outre la caméra 41, les moyens 4 de prise de vues comportent un objectif 42 standard, de focale et tirage adaptés au champ 5 à observer. De façon typique, la focale de cet objectif 42 est de 50 millimètres et la bague allonge d'environ 17 millimètres. Pour une telle caméra, lorsque son réglage de la dynamique d'exposition électronique est effectué, le diaphragme de la caméra reste constant.

De plus, il est en général nécessaire d'ajouter au dispositif optique composé de la caméra 41 et de l'objectif 42, un filtre spectral 43 permettant de modeler le contenu chromatique de la lumière reçue par la caméra 41.

En effet, l'arc nécessaire au soudage est accompagné d'une lumière intense dont certains rayonnements ont une longueur d'onde inférieure à 600 nanomètres ; ces rayonnements dégraderaient la qualité des images prises par la camera 41. Le filtre spectral 43 permet notamment d'éliminer ces rayonnements. En effet, pendant les phases de soudage, le système de prise de vues (c'est-à-dire la camera 41) fonctionne en eclairage dit passif, car la scène de soudage est éclairée dans son ensemble par la lumière émise par l'arc et l'électrode.

Ce filtre permet, de plus, d'améliorer la visibilité des spots lumineux 31 émis par les moyens 3 de formation de spots lumineux lorsque ledit filtre 43 est interferentiel, centre sur la longueur d'onde desdits spots 31.

Les spots lumineux 31 sont des spots ponctuels élémentaires, c'est-à-dire que ce sont des points lumineux qui sont émis par des moyens 3 fixes par rapport à la torche 1 de soudage, le terme "spot élémentaire" étant défini comme le contraire d'un "spot balayant une surface".

A l'opposé, lors d'observations hors présence de l'arc, il faut escamoter le filtre interferentiel 43 qui présente une transmission d'ondes lumineuses trop faible, même en présence d'un eclairage additionnel 9 très puissant.

De façon avantageuse, la largeur de bande du filtre 43 est adaptée pour équilibrer les visibilités relatives des spots et la scène de soudage. Cette bande est typiquement de 1 nanomètre.

Le choix d'un modèle CCD de camera 41 permet une meilleure qualité d'images du fait de la résistance de ladite camera à l'éblouissement et sa relative insensibilité aux sévères conditions électromagnétiques présentes à courte distance de l'arc.

Les moyens 3 de formation de spots lumineux, cités précédemment, comportent de petits lasers Hélium-Néon de quelques milliwatts, non représentés, sortant chacun sur une fibre 33 guide de lumière, aboutissant elle-même à une petite optique de projection 34. Cette optique 34 est pourvue de réglages fins permettant de localiser le spot lumineux 31 à l'endroit voulu du champ 5 d'observation.

Selon les modes de réalisation de l'invention, les spots lumineux 31 sont au nombre de deux ou de trois. Ils sont utilisés pour mesurer la hauteur de la tête de soudage au-dessus de leurs points d'impact, par une méthode connue de triangulation.

Selon le mode de réalisation préféré de l'invention, on projette deux spots 31A et 31B à l'avant de la scène de soudage, de part et d'autre de son axe longitudinal, représenté par l'axe des abscisses x sur la figure, dans des zones normalement sombres et dégagées.

Des moyens de mesure de position des spots permettent de déduire des effets d'éclairage résultant de la projection des spots, la position desdits spots. Dans un premier mode de réalisation de l'invention décrit sur la figure 1, ces moyens de mesure sont confondus avec la caméra 41 de prise de vues.

Selon un autre mode de réalisation, ces moyens de mesure sont des capteurs de position, courants dans le commerce.

Il s'agit par exemple de circuits de type PSD (Position Sensing Device) analogiques, donnant, par association avec une électronique adéquate, la position longitudinale du "centre de gravité" d'un spot lumineux projeté sur une barrette photosensible.

D'une façon générale, les mesures de hauteur par triangulation utilisant la projection des spots sur la scène de soudage permettent de déterminer certains paramètres précédemment cités. De façon plus précise :
- on peut ainsi, sur un spot 31, ou par une mesure de moyenne sur deux spots, mesurer la hauteur de tête hors arc pour effectuer un recalage vertical préalable ;
- avec deux spots 31A-31B, en mode soudage, on peut soit mesurer le dénivelé d'accostage de part et d'autre du joint 51 (mesure différentielle), soit, par une mesure de moyenne, mesurer le bombé, c'est-à-dire la surépaisseur du cordon 52 en formation lors d'un soudage avec fil d'apport, car la torche remonte en cas de bombé, s'il y a régulation de tension d'arc.

Dans un mode de réalisation dans lequel on utilise trois spots, le troisième spot est placé à l'arrière au voisinage immédiat de la pointe de l'électrode, par rapport à la direction x de soudage. Ce troisième spot permet soit une mesure directe du bombé du cordon 52 en arrière de la torche, soit un éclairage supplémentaire du joint 51 pour effectuer le suivi dudit joint lorsque la caméra 41 est située sur un axe proche de la normale au plan de soudage.

Sur la figure 1, on a également représenté l'alimentation en gaz 6, le gaz (à savoir un gaz neutre de protection, hélium, argon, ..., dans la réalisation décrite) étant emmagasiné momentanément dans la buse.

Une liaison électrique 8 assure une alimentation en énergie de la tête de soudage, une transmission de commandes entre ladite tête et l'électronique de commande, ainsi qu'une sortie vidéo reliant la caméra 41 à un dispositif extérieur à partir duquel l'opérateur peut visualiser les images de la scène de soudage.

Une alimentation 7A et une évacuation 7B en eau sont réunies aux moyens de refroidissement non représentés des moyens de prise de vues et de la torche.

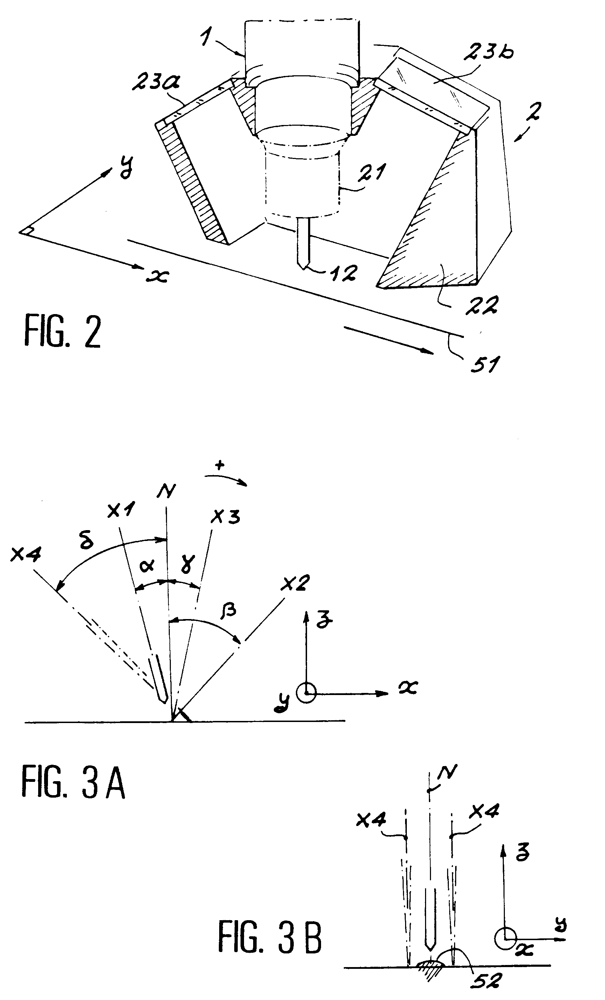

Sur la figure 2, on a représenté, en coupe longitudinale, la buse spéciale-vision 2 adaptée sur la torche de soudage 1. Cette buse 2 est adaptée aux trajets optiques de prise de vues et de projection des spots, ces trajets convergeant à proximité immédiate de la pointe 12 de l'électrode.

Pour cela, la buse 2 comporte, d'une part un fourreau 21 de type classique entourant étroitement l'électrode 11 et, d'autre part un corps de buse 22 entourant toute l'extrémité de la touche de soudage 1.

Le fourreau 21 de la buse est de taille plus courte que l'électrode 11 de façon à ce qu'une partie relativement importante de ladite électrode dépasse du fourreau 21, cette partie de l'électrode comprenant obligatoirement la pointe 12 de l'électrode.

Le corps de buse 22 entourant l'extrémité de la torche est relativement vaste, de façon à contenir suffisamment de gaz au niveau du bain de fusion et du cordon en formation. Selon un mode de réalisation, le corps de buse 22 est fabriqué, en partie ou intégralement, dans un matériau transparent, permettant aux trajets optiques de prise de vues et de projection des spots, de traverser la buse 2 en 23a et 23b.

Sur les figures 3A et 3B est représentée la géométrie des orientations principales de la tête de soudage.

De façon plus précise, la figure 3A montre une coupe parallèle à la direction de soudage x et la figure 3B montre une coupe perpendiculaire à cette même direction de soudage.

Ainsi, sur la figure 3A, on peut voir les orientations de la tête de soudage selon un plan (x, z) perpendiculaire au plan de soudage, c'est-à-dire qu'on peut voir, pour le mode de réalisation préféré de l'invention, les orientations angulaires prises par les différents éléments de la tête de soudage par rapport à la normale N au plan de soudage (x, y).

Toutes les orientations angulaires sont données en référence à cette normale N du plan de soudage.

Ainsi, l'axe X1 de la torche de soudage forme un angle d'environ -10° à -15° avec la normale N. En effet, la torche de soudage est légèrement inclinée vers l'arrière, de façon à permettre la visibilité du bain de fusion par la caméra. Le soudage se fait alors "en poussant".

Les moyens de prise de vues, à savoir essentiellement la caméra, observent la scène de soudage avec un certain angle par rapport à la normale N. Cet angle joue un rôle important dans la possibilité d'exploitation de l'image obtenue de la scène de soudage. En effet, à la longueur d'onde utilisée, la scène de soudage est essentiellement éclairée par la pointe de l'électrode portée à haute température. Les caractéristiques de l'image obtenue dépendent donc fondamentalement des effets de reflets et d'éclairage semi-rasant dus à cette illumination.

On peut ainsi déterminer deux zones angulaires caractérisant chacune une exploitation différente de la scène de soudage :
- pour étudier le joint en avant du bain de fusion (dans le cas où aucun fil d'apport n'est utilisé), la direction X2 de la caméra doit former un angle β d'environ 45° avec la normale N ; le joint est alors représenté, sur l'image, par une ligne sombre sur un fond brillant ;
- pour mesurer la largeur du bain de fusion, la meilleure observation est effectuée pour un angle γ d'environ 15° entre l'axe optique X3 de la caméra et la normale N.

Au contraire, la hauteur de tête de soudage peut être mesurée pour les deux orientations angulaires β ou γ citées précédemment, auxquelles on ajoute corrélativement l'angle de projection des spots.

Pour permettre la mise en oeuvre du principe de mesure de hauteur par triangulation, les spots doivent être projetés suivant un angle suffisamment important par rapport aux axes X2 ou X3 de la caméra. Cependant, lesdits spots ne sont pas non plus projetés selon un angle trop rasant, c'est-à-dire un angle faible par rapport au plan de soudage, de façon à se diffuser suffisamment sur le plan d'impact. Un angle δ de 45° entre l'axe X4 de projection des spots et la normale N, avec une projection par l'arrière de la torche de soudage, répond aux deux conditions citées précédemment.

La figure 3B représente les orientations de la tête de soudage selon un plan (y, z) perpendiculaire au plan de soudage et ne contenant pas la direction de soudage. Cette figure montre les deux axes X4 des deux spots lumineux répartis de façon symétrique de part et d'autre de l'électrode de soudage, elle-même située au-dessus du cordon de soudure 52 selon la normale N.

La tête de soudage, telle qu'elle vient d'être décrite, peut être mise en application dans un système de soudage automatique. Pour une telle application, ladite tête de soudage est fixée à l'extrémité terminale d'un porteur de soudage tel qu'un robot ou un banc de soudage. Elle est également reliée à des moyens de traitement d'images permettant de déduire desdites images, les valeurs des paramètres de soudage et donc les valeurs des corrections à apporter au système.

Un tel système assure la télécommande de nombreux éléments de la tête de soudage et assure notamment l'escamotage du filtre spectral par télécommande.

## Revendications

1. Tête de soudage comportant :
- une torche de soudage (1) apte à former un cordon de soudage (52) situé dans un plan de soudage (x, y) ;
- des moyens d'éclairage (9) d'une zone de soudage comprenant un bain de soudage ainsi que le cordon de soudage ;
- des moyens (41) aptes à effectuer des prises de vues de la zone de soudage ; la tête de soudage étant caractérisée en ce qu'elle comporte de plus :
- une électrode de soudage (11) sur la torche de soudage (1) ;
- des moyens (3) aptes à former des spots lumineux (31) ponctuels et élémentaires sur la zone de soudage ; et
- des moyens aptes à déterminer la position des spots par triangulation et permettant ainsi de mesurer la hauteur de la tête de soudage au-dessus de leurs points d'impact.

2. Tête de soudage selon la revendication 1, caractérisée en ce que les moyens de prise de vues sont orientables par rapport à une normale (N) à un plan de soudage (x, y) contenant la zone de soudage, selon au moins un angle ajustable (β,γ) de prise de vues, permettant la détermination de au moins un paramètre de soudage.

3. Tête de soudage selon la revendication 2, caractérisée en ce que les angles de prise de vues sont respectivement d'environ 15 et 45°.

4. Tête de soudage selon l'une quelconque des revendications 1 à 3, caractérisée en ce que la torche de soudage est inclinée par rapport à la normale au plan de soudage, l'angle (α) de cette inclinaison étant négatif par rapport aux angles de prise de vues.

5. Tête de soudage selon l'une quelconque des revendications 1 à 4, caractérisée en ce qu'elle comprend en outre une buse (2) de soudage apte à permettre la formation des spots lumineux et la prise de vues de la scène de soudage.

6. Tête de soudage selon la revendication 5, caractérisée en ce que la buse comprend un large corps (22) entourant une partie inférieure de la torche de soudage et permettant le passage des trajets optiques de prise de vues et de formation des spots et un fourreau (21) entourant une partie supérieure de l'électrode, l'extrémité inférieure (12) de ladite électrode étant extérieure à la buse.

7. Tête de soudage selon l'une quelconque des revendications 1 à 6, caractérisée en ce que les moyens pour former des spots lumineux sur la scène de soudage sont aptes à former deux spots disposés de part et d'autre, et en avant, de l'électrode de soudage.

8. Tête de soudage selon l'une quelconque des revendications 1 à 6, caractérisée en ce que trois spots sont disposés l'un à l'arrière de l'électrode par rapport à la direction de soudage et les deux autres de part et d'autre, et en avant, de l'électrode.

9. Tête de soudage selon l'une quelconque des revendications 7 et 8, caractérisée en ce que les moyens pour former les spots lumineux comprennent au moins une source (32) de lumière monochromatique optiquement couplée à autant de fibres optiques (33) que de spots, chacune de ces fibres étant reliée à une optique de projection (34).

10. Tête de soudage selon la revendication 9, caractérisée en ce que la source de lumière est un laser.

11. Tête de soudage selon l'une quelconque des revendications 9 et 10, caractérisée en ce que les moyens pour observer la zone comportent une caméra (41) de prise de vues équipée d'un filtre spectral (43) escamotable, centré sur la lumière monochromatique des moyens de formation des spots.

12. Tête de soudage selon l'une quelconque des revendications 1 à 11, caractérisée en ce que les seconds moyens pour effectuer les prises de vues sont en même temps les premiers moyens aptes à déterminer la position des spots.

13. Tête de soudage selon l'une quelconque des revendications 1 à 11, caractérisé en ce que les premiers moyens aptes à déterminer la position des spots sont des capteurs de position indépendants.

14. Procédé de soudage automatique mis en oeuvre par la tête de soudage selon l'une quelconque des revendications 1 à 13, caractérisé en ce qu'il consiste en une prise de vue d'une scène de soudage en cours durant laquelle est réalisé le bain de soudage et est formé le cordon de soudage.

15. Système de soudage automatique comprenant une tête de soudage selon l'une quelconque des revendications 1 à 13, caractérisé en ce qu'il comprend en outre des moyens de traitement reliés aux moyens pour observer la zone de soudage et aptes à corriger en temps réel le déplacement relatif entre la torche et la zone de soudage et les paramètres de soudage.

## Claims

1. Welding head comprising a welding torch (1) able to form a weld bead (52) located in a welding plane (x,y), means (9) for illuminating a welding zone, as well as the weld bead; means (41) able to take pictures of the weld zone; the welding head being characterized in that it also comprises a welding electrode (11) on the welding torch (1); means (3) able to form elementary, punctiform light spots (31) on the weld zone; and means able to determine the position of the spots by triangulation, thus making it possible to measure the height of the welding head above their impact points.

2. Welding head according to claim 1, characterized in that the picture-taking means can be oriented with respect to a perpendicular (N) to a welding plane (x,y) containing the welding zone, at one adjustable picture-taking angle (β,γ) at least, making it possible to determine at least one welding parameter.

3. Welding head according to claim 2, characterized in that the picture-taking angles are about 15 and 45 degrees, respectively.

4. Welding head according to any one of the claims 1 to 3, characterized in that the welding torch is inclined with respect to the perpendicular to the welding plane, angle (α) of this inclination being negative relative to the picture-taking angles.

5. Welding head according to any one of the claims 1 to 4, characterized in that it further comprises a welding nozzle (2) able to make possible the formation of light spots and picture-taking of the welding scene.

6. Welding head according to claim 5, characterized in that the nozzle comprises a wide body (22) surrounding a lower part of the welding torch and making possible the passage of optical paths for picture-taking and for spot formation, and a sleeve (21) surrounding an upper part of the electrode, lower end (12) of said electrode being outside the nozzle.

7. Welding head according to any one of the claims 1 to 6, characterized in that the means for forming light spots on the welding scene are able to form two spots located on both sides, and in front of, the welding electrode.

8. Welding head according to any one of the claims 1 to 6, characterized in that there are three spots, one located behind the electrode with respect to the welding direction, and the other two located on either side, and in front of, the electrode.

9. Welding head according to either of the claims 7 and 8, characterized in that the means for forming the light spots comprise at least one source (32) of monochromatic light optically coupled to as many optical fibers (33) as there are spots, each of these fibers being connected to an optical projection device (34).

10. Welding head according to claim 9, characterized in that the light source is a laser.

11. Welding head according to either of the claims 9 and 10, characterized in that the means for observing the zone comprise a picture-taking camera (41) equipped with a retractable spectral filter (43), centered on the monochromatic light of the means for spot formation.

12. Welding head according to any one of the claims 1 to 11, characterized in that the second means for performing the picture-taking are, at the same time, the first means able to determine the position of the spots.

13. Welding head according to any one of the claims 1 to 11, characterized in that the first means able to determine the position of the spots are independent position sensors.

14. Automatic welding process used by the welding head according to any on e of the claims 1 to 13, characterized in that it consists in taking a picture of a welding scene, during which the melting bath is made and the weld bead is formed.

15. Automatic welding system comprising a welding head according to any one of the claims 1 to 13, characterized in that it further comprises processing means connected to means for observing the welding zone and able to correct, in real time, the relative displacement between the torch and the welding zone and the welding parameters.

## Patentansprüche

1. Schweißkopf, umfassend:
- einen Schweißbrenner (1) zum Bilden einer Schweißnaht (52) in einer Schweißebene (x, y);
- Beleuchtungseinrichtungen (9) einer Schweißzone, ein Schweißbad sowie die Schweißnaht umfassend;
- Einrichtungen (41) zum Herstellen von Aufnahmen der Schweißzone; wobei der Schweißkopf
**dadurch gekennzeichnet** ist, daß er außerdem umfaßt:
- eine Schweißelektrode (11) an dem Schweißbrenner (1);
- Einrichtungen (3) zum Bilden von punktuellen und elementaren Lichtpunkten (31) auf der Schweißzone; und
- Einrichtungen zum Festlegen der Lage der Lichtpunkte durch Triangulation, die so ermöglichen, die Höhe des Schweißkopfes über ihren Auftreffpunkten zu messen.

2. Schweißkopf nach Anspruch 1, dadurch gekennzeichnet, daß die Aufnahmeeinrichtungen ausrichtbar sind in bezug auf eine Senkrechte bzw. Normale zu einer die Schweißzone enthaltenden Schweißebene (x, y), wenigstens entsprechend einem verstellbaren Aufnahmewinkel (β,γ), was die Bestimmung bzw. Feststellung von wenigstens einem Schweißparameter ermöglicht.

3. Schweißkopf nach Anspruch 2, dadurch gekennzeichnet, daß die Aufnahmewinkel jeweils ungefähr 15 und 45° betragen.

4. Schweißkopf nach einem der Ansprüche 1 bis 3, dadurch gekennzeichnet, daß der Schweißbrenner geneigt ist in bezug auf die Normale der Schweißebene, wobei der Winkel (α) dieser Neigung negativ ist bezüglich der Aufnahmewinkel.

5. Schweißkopf nach einem der Ansprüche 1 bis 4, dadurch gekennzeichnet, daß er außerdem eine Schweißdüse (2) umfaßt, die die Bildung der Lichtpunkte ermöglicht und die Aufnahmen von der Schweißszene.

6. Schweißkopf nach Anspruch 5, dadurch gekennzeichnet, daß die Düse ein großes Gehäuse (22) umfaßt, das einen unteren Teil des Schweißbrenners umgibt und Lichtwege für Aufnahmen und zur Bildung von Lichtpunkten ermöglicht, und eine Hülse (21), die einen oberen Teil der Elektrode umgibt, wobei das untere Ende (12) der Elektrode sich außerhalb der Hülse befindet.

7. Schweißkopf nach einem der Ansprüche 1 bis 6, dadurch gekennzeichnet, daß die Einrichtungen zum Bilden der Lichtpunkte auf der Schweißszene zwei Lichtpunkte bilden können, angeordnet zu beiden Seiten der Schweißelektrode, vor dieser.

8. Schweißkopf nach einem der Ansprüche 1 bis 6, dadurch gekennzeichnet, daß drei Lichtpunkte angeordnet sind, der eine bezüglich der Schweißrichtung hinter der Elektrode und die beiden anderen zu beiden Seiten der Elektrode, vor dieser.

9. Schweißkopf nach einem der Ansprüche 7 und 8, dadurch gekennzeichnet, daß die Einrichtungen zum Bilden der Lichtpunkte wenigstens eine Quelle (32) für monochromatisches Licht umfassen, optisch mit ebensovielen Lichtleitfasern (33) gekoppelt, wie es Lichtpunkte gibt, wobei jede dieser Fasern verbunden ist mit einer Projektionsoptik (34).

10. Schweißkopf nach Anspruch 9, dadurch gekennzeichnet, daß die Lichtquelle ein Laser ist.

11. Schweißkopf nach einem der Ansprüche 9 und 10, dadurch gekennzeichnet, daß die Einrichtungen zum Beobachten der Schweißzone eine Aufnahmekamera (41) umfassen, die ausgestattet ist mit einem wegziehbaren Spektralfilter (43), zentriert auf das monochromatische Licht der Lichtpunktbildungseinrichtungen.

12. Schweißkopf nach einem der Ansprüche 1 bis 11, dadurch gekennzeichnet, daß die zweiten Einrichtungen zum Durchführen der Aufnahmen zugleich die ersten Einrichtungen zum Bestimmen der Lage der Lichtpunkte sind.

13. Schweißkopf nach einem der Ansprüche 1 bis 11, dadurch gekennzeichnet, daß die ersten Einrichtungen zum Bestimmen der Lage der Lichtpunkte unabhängige Lagesensoren sind.

14. Automatisches Schweißverfahren, durchgeführt mit dem Schweißkopf nach einem der Ansprüche 1 bis 13, dadurch gekennzeichnet, daß es aus einer Aufnahme einer laufenden Schweißszene besteht, während der das Schweißbad gebildet wird und die Schweißnaht geformt wird.

15. Automatisches Schweißsystem, einen Schweißkopf nach einem der Ansprüche 1 bis 13 umfassend, dadurch gekennzeichnet, daß es außerdem Verarbeitungseinrichtungen umfaßt, verbunden mit den Einrichtungen zum Beobachten der Schweißzone und fähig, in Echtzeit die relative Verschiebung zwischen dem Brenner und der Schweißzone und die Schweißparameter zu korrigieren.
